# EUROPÄISCHE PATENTSCHRIFT

(11) **EP 1 110 695 B1**
(45) Veröffentlichungstag und Bekanntmachung des Hinweises auf die Patenterteilung: **14.04.2004**
(21) Anmeldenummer: 00126648.5
(22) Anmeldetag: 05.12.2000
(51) Int. Cl.: B29C 47/30, B29B 9/06

(54) **Lochplatte für eine Granulier-Vorrichtung**
Nozzle plate for granulating device
Plaque à orifices multiples pour un dispositif de granulation

(30) Priorität: 22.12.1999 DE 19962036
(43) Veröffentlichungstag der Anmeldung: 27.06.2001
(73) Patentinhaber: Coperion Werner & Pfleiderer GmbH & Co. KG, 70469 Stuttgart (DE)
(72) Erfinder: Schneider, Friedrich, 71287 Weissach (DE); Wiesner, Ulrich, 71394 Kernen (DE); Bartl, Jürgen, 71642 Ludwigsburg (DE)
(74) Vertreter: Rau, Manfred, Dr. Dipl.-Ing.

(56) Entgegenhaltungen:
- EP-A- 0 432 821
- US-A- 3 271 822
- PATENT ABSTRACTS OF JAPAN vol. 012, no. 041 (M-666), 6. Februar 1988 (1988-02-06) -& JP 62 196117 A (MITSUBISHI METAL CORP;OTHERS: 01), 29. August 1987 (1987-08-29)

## Beschreibung

Die Erfindung betrifft eine Lochplatte für eine Granulier-Vorrichtung nach dem Oberbegriff des Anspruches 1.

Die Stirnseite derartiger Lochplatten wird im Bereich der Löcher mit Messern überstrichen, die die austretenden Kunststoff-Schmelze-Stränge zu Granulat schneiden. Diese Schneidflächen sind erheblichem Verschleiß ausgesetzt. Sie werden daher beispielsweise mit Verschleißschutz-Einsätzen aus wolfram- oder titancarbidhaltigem Pulvermetall belegt.

Eine Lochplatte nach dem Oberbegriff des Anspruches 1 ist aus der JP 62 196 117 A bekannt, wobei davon ausgegangen wird, dass die Verschleißschutz-Einsätze bei dieser Lochplatte im Grundkörper mittels Lot befestigt sind. Dort ist eine Anordnung von Verschleißschutz-Einsätzen beschrieben, welche die Form von Ringabschnitten haben und sich zu zwei konzentrischen Lochringen zum Schmelzdurchtritt ergänzen.

Aus der US 3,271,822 A, ist eine Lochplatte der gattungsgemäßen Art bekannt, bei der der von Messern überstrichene Ring-Abschnitt der Lochplatte, in dem die Löcher austreten, mit quadratischen, aneinanderstoßenden kachelartigen Verschleißschutz-Einsätzen versehen ist. Bei dieser Ausgestaltung kann die durch den Ring-Abschnitt gebildete Schneidfläche der Lochplatte vollständig mit Verschleißschutzmaterial belegt werden. Nachteilig ist, dass gegenüber dem Grundkörper der Lochplatte nur eine Bodenlötung vorhanden ist, so dass die Gefahr der Abschälung der Verschleißschutz-Einsätze gegeben ist. Schwierig ist weiterhin die Montage der Verschleißschutz-Einsätze, da deren Löcher mit den im Grundkörper ausgebildeten Löchern zum Fluchten gebracht werden müssen. Dies setzt aufwendige Zentrierungsarbeiten voraus. Alternativ müssten die Einsätze nach dem Einlöten gebohrt oder erodiert werden.

Weiterhin sind Lochplatten der gattungsgemäßen Art bekannt, bei denen die Verschleißschutz-Einsätze zylinderringförmig ausgebildet sind und in entsprechende zylindrische Sacklochbohrungen fluchtend mit den im Grundkörper ausgebildeten Löchern eingelötet werden. Eine Zentrierung erfolgt hierbei gleichsam automatisch. Da die Einsätze rund um ihre Mantelfläche mit dem Grundkörper verlötet sind, ist ein Abschälen der Verschleißschutz-Einsätze durch die umlaufenden Messer ausgeschlossen. Der Nachteil liegt darin, daß nur etwa 50 % der insgesamt von den Messern überstrichenen Schneidfläche mit Verschleißschutz-Einsätzen geschützt werden können.

Aus der US 3,461,495 A, ist es bekannt, größere Segmente der ringabschnittsförmigen Schneidfläche einer Lochplatte mit Verschleißschutz-Platten zu belegen. Der Vorteil liegt darin, daß die Schneidfläche vollständig mit verschleißfestem Material belegt ist und daß wiederum auch ein Abschälen ausgeschlossen ist. Der Nachteil liegt darin, daß die Löcher in der Verschleißschutz-Platte nachträglich gebohrt oder erodiert werden müssen, was nur bei Einsatz von titancarbidhaltigem Pulvermetall möglich ist. Dieses weist nur eine Härte von etwa 60 HRC im Vergleich zu wolframcarbidhaltigem Pulvermetall mit einer Härte von 70 bis 90 HRC auf. Die Standzeit ist also geringer.

Der Erfindung liegt die Aufgabe zugrunde, eine Lochplatte der gattungsgemäßen Art so auszugestalten, daß einerseits ein möglichst hoher Anteil der ringabschnittsförmigen Schneidflächen mit Verschleißschutz-Einsätzen belegt ist, daß gleichzeitig eine einfache Montage möglich ist und daß ein ausreichender Schutz gegen Abschälen gegeben ist.

Diese Aufgabe wird erfindungsgemäß durch die Merkmale im Kennzeichnungsteil des Anspruches 1 gelöst. Durch die erfindungsgemäßen Maßnahmen wird jeweils ein raupenförmiger, sich über eine Reihe von Löchern erstreckender geschlossener Verschleißschutz erreicht, der breiter ist als der Abstand der Löcher in der Reihe. An ihren Kreiszylinderabschnittsflächen ist eine Mantellötung gegenüber dem Grundkörper gegeben, so daß eine sehr hohe Festigkeit erreicht wird. Es ist eine sehr einfache Montage gegeben, da die Kreiszylinderabschnittsflächen eine automatische Zentrierung der vor dem Einsetzen der Einsätze in die Ausnehmungen in den Einsätzen erzeugten Löcher mit den im Grundkörper ausgebildeten Löchern ermöglichen.

Weitere vorteilhafte und zum Teil erfinderische Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Granulier-Vorrichtung in Seiten-Längsansicht in teilweise aufgebrochener Darstellung,
- Fig. 2: eine Teil-Draufsicht auf eine Lochplatte und
- Fig. 3: einen Teil-Querschnitt durch die Lochplatte entsprechend der Schnittlinie III-III in Fig. 2.

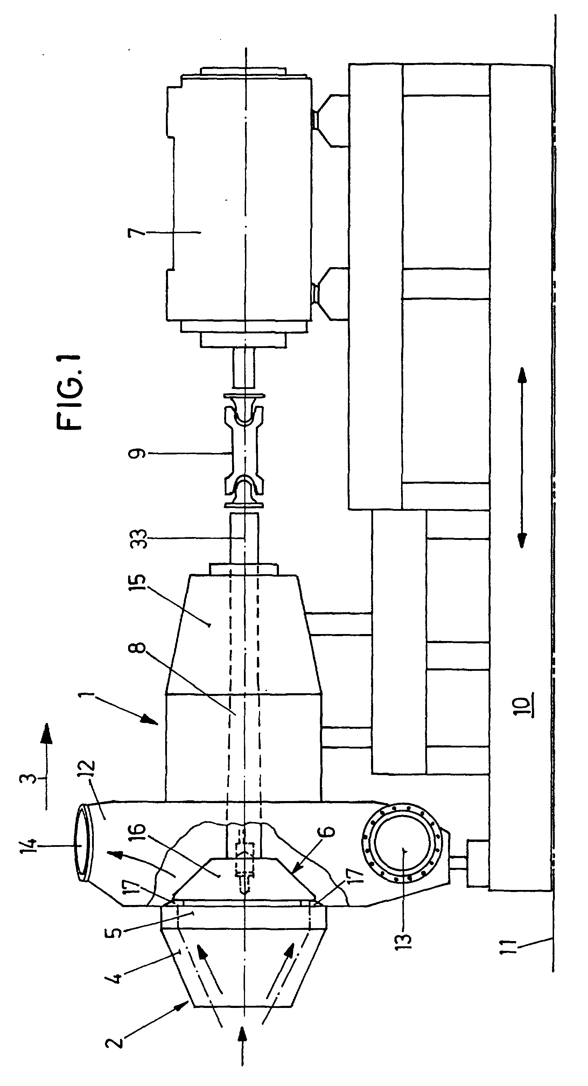

Die in Fig. 1 dargestellte Granulier-Anlage weist eine Granulier-Vorrichtung 1 auf, die einem Extruder 2 in Produktionsrichtung 3 nachgeordnet ist, von dem nur ein Granulierkopf 4 in einer feststehenden Lochplatte 5 dargestellt ist.

Die Granulier-Vorrichtung 1 weist einen Messerkopf 6 auf, der von einem als Elektromotor ausgebildeten Antrieb 7 über eine Welle 8, in die eine Kupplung 9 eingefügt ist, antreibbar ist. Der Antrieb 7 und die Granulier-Vorrichtung 1 sind auf einem Wagen 10 angeordnet, der auf dem, beispielsweise durch Schienen gebildeten Untergrund 11 aus der in Fig. 1 dargestellten Betriebsstellung in Produktionsrichtung 3 in eine vom Granulierkopf 4 beabstandete Stellung verfahrbar ist.

Die Granulier-Vorrichtung 1 weist eine den Messerkopf 6 umgebende Granulierhaube 12 auf, die mit einem unteren Wasserzulauf 13 und einem oberen Wasserablauf 14 versehen ist. In Richtung zum Antrieb 7 schließt sich an die Granulierhaube 12 ein Lagergehäuse 15 an, in dem die Welle 8 in üblicher Weise gelagert ist.

Der Messerkopf 6 weist einen in der Praxis wegen des flügelartigen Aufbaus als Messerflügel bezeichneten Messerhalter 16 auf, der an seiner dem Granulierkopf 4 zugewandten Stirnseite mit Messern 17 versehen ist, die beim Granulieren an der ihnen zugewandten Stirnseite der Lochplatte 5 mit hoher Geschwindigkeit entlangstreichen und hierdurch aus dem Extruder 2 durch die Lochplatte 5 austretende Kunststoff-Schmelze Stränge in Granulat zerschneiden, das mit dem durch den Wasserzulauf 13 in die Granulierhaube 12 eintretenden Wasser zum Wasserablauf 14 und aus diesem herausgefördert wird. Soweit die Granulier-Anlage bis hierher beschrieben ist, ist sie in der Praxis allgemein bekannt und verbreitet.

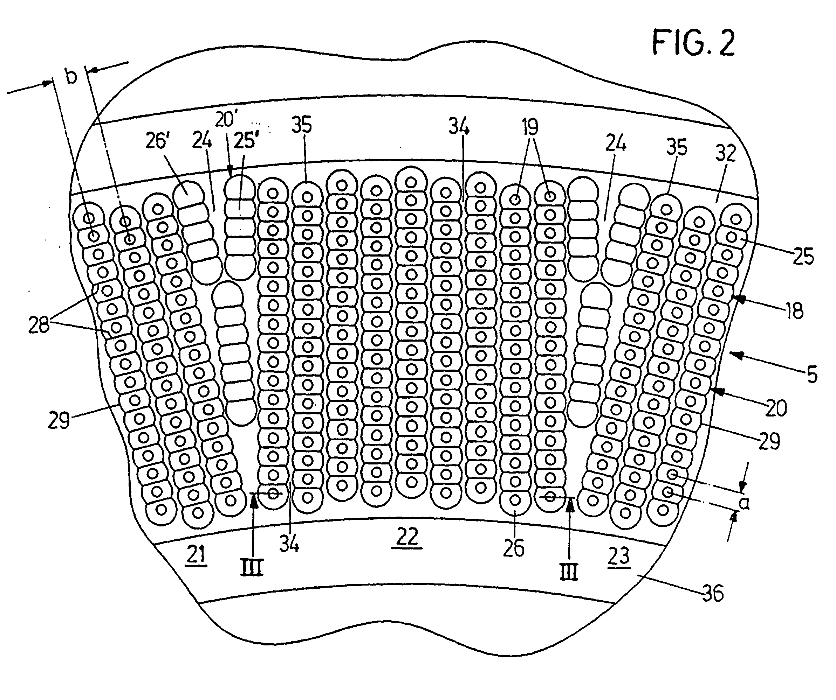

Die Lochplatte 5 weist in ihrem radial äußeren Bereich eine ringförmige Schneidfläche 18 auf, aus der eine Vielzahl von Löchern 19 ausmünden, durch die in der erwähnten Weise zu granulierende Kunststoff-Schmelze in dem Querschnitt der Löcher 19 entsprechenden Strängen austritt. Diese Schneidfläche 18 wird von den Messern 17 überstrichen. Sie ist deshalb extremem Verschleiß ausgesetzt. Die Löcher 19 sind - wie Fig. 2 entnehmbar ist - jeweils in Reihen 20 angeordnet, wobei der Abstand a der Löcher 19 voneinander in den jeweiligen Reihen 20 sehr gering ist. Er ist über alle Reihen 20 identisch. Jeweils eine größere Zahl von Reihen 20 der Löcher 19 ist in einem Block 21, 22, 23 angeordnet, in dem jeweils die Reihen 20 etwa parallel zueinander verlaufen. Die Blöcke 21 und 23 sind in Fig. 2 nur unvollständig dargestellt. Da die einzelnen Blöcke 21, 22, 23 auf der ringförmigen Schneidfläche 18 angeordnet sind, ist zwischen ihnen jeweils ein etwa spitzwinkliger dreieckförmiger lochfreier Abschnitt 24 ausgebildet.

Die Schneidfläche 18 ist im wesentlichen durch Verschleißschutz-Einsätze 25, 26 gegen Verschleiß durch die auf ihr entlangschleifenden Messer 17 geschützt. Die Umfangsflächen 27 der innerhalb der Reihen 20 angeordneten Einsätze 25 werden durch zwei zueinander parallele, quer zur Längsrichtung einer Reihe 20 verlaufende Sehnenflächen 28 und zwei einander gegenüberliegende Kreiszylinderabschnittsflächen 29 begrenzt. Die Mittel-Längs-Achse dieser Kreiszylinderabschnittsflächen 29 liegt in der Achse 30 der jeweils durch zylindrische Bohrungen gebildeten Löcher 19. Die Einsätze 25 sind in Ausnehmungen 31 angeordnet, die im Grundkörper 36 ausgehend von dessen Stirnseite 32 als Sacklochbohrungen ausgebildet sind und die in der Draufsicht einander teilweise durchdringen. Zwei einander in einer Reihe 20 benachbarte Einsätze 25 sind mit ihren durch die Sehnenflächen 28 begrenzten Flächen einander direkt benachbart und lassen nur einen geringen Spalt für Lot frei, der in der Zeichnung nicht erkennbar ist. Die Einsätze 25 haben radial zur Achse 33 der Welle 8 und damit der Lochplatte 5 eine deutlich geringere Erstreckung als in Umfangsrichtung der ringförmigen Schneidfläche 18. Ihre Außenflächen fluchten mit der Stirnseite 32 und definieren die Schneidfläche 18. Durch die Art der Anordnung der Einsätze 25, 26 in einer Reihe 20 hat diese ein raupenförmiges Aussehen.

Benachbarte Reihen 20 innerhalb eines Blocks 21, 22, 23 haben einen solchen Abstand b voneinander, daß zwischen den einander gegenüberliegenden Einsätzen 25 ein durchgehender schmaler Steg 34 aus dem Basismaterial der Lochplatte 5, also des Grundkörpers 36, stehenbleibt. Dieser Steg 34 kann sehr schmal ausgebildet sein. Die Löcher 19 einer Reihe 20 sind etwa radial zur Achse 33 gegenüber den Löchern 19 einer benachbarten Reihe 20 um den halben Abstand a zweier benachbarter Löcher 19 derselben Reihe 20 versetzt angeordnet, so daß - wie sich aus Fig. 2 ergibt - der jeweilige Steg 34 zwischen zwei benachbarten Reihen 20 schlangenlinienförmig verläuft, aber etwa angenähert gleiche Dicke über seine ganze Länge aufweist.

Die an den beiden Enden jeder Reihe 20 befindlichen Einsätze 26 sind nur auf einer, nämlich der dem benachbarten Einsätze 25 zugewandten Seite mit einer abgeflachten Sehnenfläche 28 versehen und weisen ansonsten eine die beiden Kreiszylinderabschnittsflächen 29 einschließende Kreiszylinderabschnittsfläche 35 auf.

In dem lochfreien Abschnitt 24 sind jeweils Reihen 20' von Verschleißschutz-Einsätzen 25', 26' angeordnet, die sich von den geschilderten Einsätzen 25 und 26 nur dadurch unterscheiden, daß sie keine Löcher 19 aufweisen. Diese Reihen 20' sind so angeordnet, daß sie den in Form eines spitzwinkligen Dreiecks ausgebildeten lochfreien Abschnitts 24 jeweils im wesentlichen ausfüllen.

Die Verschleißschutz-Einsätze 25 und 26 sind durch eine sogenannte Mantellötung der Kreiszylinderabschnittsflächen 29 und 35 mit den Stegen 34 bzw. den zugeordneten Flanken der Abschnitte 24 verlötet, also sehr fest mit dem Grundkörper 36 der Lochplatte 5 verbunden. Das Lot 37 ist als dünne Schicht dargestellt. Des weiteren ist auch noch eine Bodenlötung vorhanden, wozu das Lot 38 ebenfalls mit einem dünnen Strich dargestellt ist.

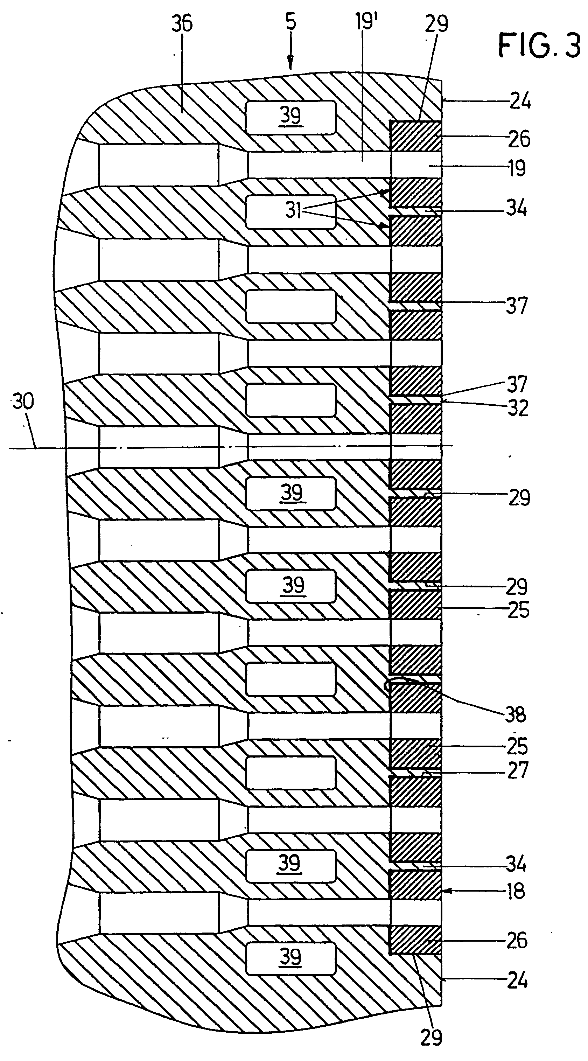

Fig. 3 ist zusätzlich zu entnehmen, daß im Grundkörper 36 der Lochplatte 5 Heizkanäle 39 ausgebildet sind, die - von der Stirnseite 32 her gesehen - hinter den Stegen 34 verlaufen. Außerdem sind die im Grundkörper 36 ausgebildeten, zu den Löchern 19 in den Einsätzen 25, 26 führenden, durch Bohrungen gebildeten Löcher 19' sichtbar.

## Patentansprüche

1. Lochplatte für Granulier-Vorrichtung,
- mit einem eine Stirnseite (32) aufweisenden Grundkörper (36),
- mit im Grundkörper (36) ausgebildeten Löchern (19') zum Durchtritt von Schmelze,
-- die in Reihen (20) angeordnet sind,
- mit Verschleißschutz-Einsätzen (25, 26), die
-- mit den Löchern (19') im Grundkörper (36) fluchtende, an der Stirnseite (32) austretende Löcher (19) aufweisen,
-- in angepaßten Ausnehmungen (31) im Grundkörper (36) angeordnet und mittels Lot (37, 38) befestigt sind und
- mit der Stirnseite (32) des Grundkörpers (36) fluchten,
- wobei die jeweils in einer Reihe (20) einander benachbarten Einsätze (25, 26), zugewandt zu einem benachbarten Einsatz (25, 26) eine Sehnenfläche (28) aufweisen,
-- die der Sehnenfläche (28) des benachbarten Einsatzes (25, 26) direkt benachbart angeordnet ist,
**dadurch gekennzeichnet, daß**
- die Einsätze (25, 26) seitlich zur Sehnenfläche (28) mit mindestes einer Kreiszylinderabschnittsfläche (29, 35) versehen sind, welche konzentrisch um die Löcher (19) in den Einsätzen (25, 26) angeordnet sind,
- wobei an den Kreiszylinderabschnittsflächen (29, 35) eine Mantellötung gegenüber dem Grundkörper gegeben ist.

2. Lochplatte nach Anspruch 1, **dadurch gekennzeichnet,**
**daß** die Reihen (20) geradlinig und im wesentlichen radial zu einer zentralen, zur Stirnseite (32) senkrechten Symmetrie-Achse (33) des Grundkörpers (36) verlaufen.

3. Lochplatte nach Anspruch 1 oder 2, **dadurch gekennzeichnet,**
**daß** die innerhalb einer Reihe (20) angeordneten Einsätze (25) zwei zueinander parallele Sehnenflächen (28) und zwei einander gegenüberliegende Zylinderbogenabschnittsflächen (29) aufweisen.

4. Lochplatte nach einem der Ansprüche 1 bis 3, **dadurch gekennzeichnet,**
**daß** die Einsätze (26) an den beiden Enden einer Reihe (20) eine Sehnenfläche (28) und eine Kreiszylinderabschnittsfläche (35) aufweisen.

5. Lochplatte nach einem der Ansprüche 1 bis 4, **dadurch gekennzeichnet.**
**daß** jeweils mehrere Reihen (20) zu einem Block (21, 22, 23) zusammengefaßt sind.

6. Lochplatte nach einem der Ansprüche 1 bis 5, **dadurch gekennzeichnet,**
**daß** der Abstand (a) einander benachbarter Löcher (19) in einer Reihe (20) immer identisch ist.

7. Lochplatte nach einem der Ansprüche 1 bis 6, **dadurch gekennzeichnet,**
**daß** benachbarte Reihen (20) um einen halben Lochabstand (a) gegeneinander versetzt sind.

8. Lochplatte nach einem der Ansprüche 1 bis 7, **dadurch gekennzeichnet,**
**daß** zwischen den Einsätzen (25, 26) zweier benachbarter Reihen (20) ein schmaler Steg (34) des Grundkörpers (36) ausgebildet ist.

9. Lochplatte nach Anspruch 5, **dadurch gekennzeichnet,**
**daß** zwischen benachbarten Blöcken (21, 22, 23) etwa dreieckförmige lochfreie Abschnitte (24) ausgebildet sind.

10. Lochplatte nach Anspruch 9, **dadurch gekennzeichnet,**
**daß** in den lochfreien Abschnitten (24) lochfreie Verschleißschutz-Einsätze (25', 26') in einer Anordnung nach einem der Ansprüche 1, 2, 3, 4 vorgesehen sind.

11. Lochplatte nach einem der Ansprüche 1 bis 10, **dadurch gekennzeichnet,**
**daß** die Sehnenfläche (28) etwa quer zur Längsrichtung der Reihe (20) verläuft.

## Claims

1. A pelletizing die for a pelletizer, comprising
- a base body (36) with a front (32);
- holes (19') which are formed in the base body (36) for melt to pass through and
-- which are disposed in rows (20);
- wearing-protection inserts (25, 26)
-- which have holes (19) in alignment with the holes (19') in the base body (36) and discharging on the front (32),
-- which are disposed in adapted recesses (31) in the base body (36) and are fixed by solder (37, 38), and
-- which are in alignment with the front (32) of the base body (36);
- wherein the inserts (25, 26) which adjoin each other in a row (20), where facing an adjacent insert (25, 26), each have a chordal surface (28)
-- which is disposed directly adjacent to the chordal surface (28) of the adjacent insert (25, 26),
**characterized**
**in that** the inserts (25, 26), laterally of the chordal surface (28), are provided with at least one surface (29, 35) of an arcuate segment of a cylinder, which are disposed concentrically around the holes (19) in the inserts (25, 26),
wherein a jacket soldering towards the base body is given at the surfaces (29, 35) of an arcuate segment of a cylinder.

2. A pelletizing die according to claim 1, **characterized**
**in that** the rows (20) are straight and substantially radial of a central axis of symmetry (33) of the base body (36) being vertical to the front (32).

3. A pelletizing die according to claim 1 or 2, **characterized**
**in that** the inserts (25) which are disposed within a row (20) have two parallel chordal surfaces (28) and two opposed surfaces (29) of an arcuate segment of a cylinder.

4. A pelletizing die according to one of claims 1 to 3, **characterized**
**in that** the inserts (26) at both ends of a row (20) have a chordal surface (28) and a surface (35) of an arcuate segment of a cylinder.

5. A pelletizing die according to one of claims 1 to 4, **characterized**
**in that** several rows (20) are combined, forming a block (21, 22, 23).

6. A pelletizing die according to one of claims 1 to 5, **characterized**
**in that** the distance a of adjacent holes (19) in a row (20) is always identical.

7. A pelletizing die according to one of claims 1 to 6, **characterized**
**in that** adjoining rows (20) are staggered by half a distance a.

8. A pelletizing die according to one of claims 1 to 7, **characterized**
**in that** a narrow rib (34) of the base body (36) is formed between the inserts (25, 26) of two adjoining rows (20).

9. A pelletizing die according to claim 5, **characterized**
**in that** approximately triangular, non-holed sections (24) are formed between adjoining blocks (21, 22, 23).

10. A pelletizing die according to claim 9, **characterized**
**in that** non-holed wearing-protection inserts (25', 26') are provided in the non-holed sections (24) in an arrangement according to one of claims 1, 2, 3,4.

11. A pelletizing die according to one of claims 1 to 10, **characterized**
**in that** the chordal surface (28) extends approximately crosswise of the longitudinal direction of the row (20).

## Revendications

1. Plaque à orifices multiples pour un dispositif de granulation, comprenant :
- un corps de base (36) présentant une face frontale (32) ;
- des orifices (19') réalisés dans le corps de base (36) pour le passage d'une matière en fusion,
-- qui sont agencés en rangées (20),
- des inserts de protection anti-usure (25, 26) qui :
-- présentent des orifices (19) sortant de la face frontale (32) et en alignement avec les orifices (19') dans le corps de base (36) ;
-- sont agencés dans le corps de base (36) dans des évidements (31) ajustés, et fixés au moyen de brasure (37, 38), et
- sont en alignement avec la face frontale (32) du corps de base (36) ;
- les inserts (25, 26) mutuellement voisins respectivement dans une rangée (20) présentant une surface de corde (28) tournée vers un insert (25, 26) voisin,
-- qui est agencée en voisinage direct avec la surface de corde (28) de l'insert (25, 26) voisin,
**caractérisée en ce que** :
- les inserts (25, 26) sont munis, sur le côté de la surface de corde (28), d'au moins une surface de tronçon de cylindre (29, 35) qui sont agencées concentriquement autour des orifices (19) dans les inserts (25, 26) ;
- une brasure enveloppe étant définie par rapport au corps de base sur les surfaces de tronçon de cylindre (29, 35).

2. Plaque à orifices multiples selon la revendication 1, **caractérisée en ce que** les rangées (20) sont en ligne droite et s'étendent essentiellement radialement à un axe de symétrie (33) central, perpendiculaire à la face frontale (32), du corps de base (36).

3. Plaque à orifices multiples selon l'une ou l'autre des revendications 1 et 2, **caractérisée en ce que** les inserts (25) agencés dans une rangée (20) présentent deux surfaces de corde (28) parallèles l'une à l'autre et deux surfaces de tronçons d'arc de cylindre (29) opposées l'une à l'autre.

4. Plaque à orifices multiples selon l'une des revendications 1 à 3, **caractérisée en ce que** les inserts (26) aux deux extrémités d'une rangée (20) présentent une surface de corde (28) et une surface de tronçon de cylindre (35).

5. Plaque à orifices multiples selon l'une des revendications 1 à 4, **caractérisée en ce que** plusieurs rangées (20) sont regroupées respectivement en un bloc (21, 22, 23).

6. Plaque à orifices multiples selon l'une des revendications 1 à 5, **caractérisée en ce que** la distance (a) d'orifices (19) voisins l'un de l'autre dans une rangée (20) est toujours identique.

7. Plaque à orifices multiples selon l'une des revendications 1 à 6, **caractérisée en ce que** des rangées voisines (20) sont décalées d'une demi-distance d'orifices (a) l'une par rapport à l'autre.

8. Plaque à orifices multiples selon l'une des revendications 1 à 7, **caractérisée en ce qu'**une nervure mince (34) du corps de base (36) est réalisée entre les inserts (25, 26) de deux rangées voisines (20).

9. Plaque à orifices multiples selon la revendication 5, **caractérisée en ce que** des sections (24) approximativement en forme de triangle et exemptes d'orifices sont réalisées entre des blocs voisins (21, 22, 23).

10. Plaque à orifices multiples selon la revendication 9, **caractérisée en ce qu'**il est prévu des inserts de protection anti-usure (25', 26') exempts d'orifices dans les sections exemptes d'orifices (24), dans un agencement selon l'une des revendications 1, 2, 3, 4.

11. Plaque à orifices multiples selon l'une des revendications 1 à 10, **caractérisée en ce que** la surface de corde (28) s'étend approximativement transversalement à la direction longitudinale de la rangée (20).
